# EUROPÄISCHE PATENTSCHRIFT

(11) **EP 1 537 395 B1**
(45) Veröffentlichungstag und Bekanntmachung des Hinweises auf die Patenterteilung: **08.03.2006**
(21) Anmeldenummer: 03766225.1
(22) Anmeldetag: 18.07.2003
(51) Int. Cl.: G01L 9/00, G01L 19/06

(54) **KAPAZITIVER DRUCKSENSOR**
CAPACITIVE PRESSURE SENSOR
CAPTEUR DE PRESSION CAPACITIF

(30) Priorität: 31.07.2002 DE 10235046
(43) Veröffentlichungstag der Anmeldung: 08.06.2005
(73) Patentinhaber: ENDRESS + HAUSER GMBH + CO., D-79689 Maulburg (DE)
(72) Erfinder: DREWES, Ulfert, 79379 Müllheim (DE); HEGNER, Frank, 79540 Lörrach (DE)
(74) Vertreter: Andres, Angelika Maria
(86) Internationale Anmeldenummer: PCT/EP2003/007843
(87) Internationale Veröffentlichungsnummer: WO 2004/013593

(56) Entgegenhaltungen:
- EP-A- 0 291 393
- EP-A- 1 010 973
- US-A- 5 381 299

## Beschreibung

Die Erfindung betrifft einen kapazitiven Drucksensor, insbesondere einen kapazitiven keramischen Drucksensor.

Derartige Drucksensoren werden vielfach in der Prozeßmeßtechnik eingesetzt, um den Druck von Prozeßmedien zu messen, die als Flüssigkeiten, Gase oder Dämpfe vorliegen können.

Im wesentlichen bestehen derartige Drucksensoren aus einem Grundkörper und einer Membran, insbesondere aus einem keramischen Grundkörper und einer keramischen Membran. Am Grundkörper ist eine flache Ausnehmung vorgesehen, die auch als Membranbett bezeichnet wird und die von der Membran vollständig überdeckt wird.

Das Membranbett und die Membran begrenzen eine Druckkammer, die vom eigentlichen Prozeßmedium getrennt ist und die in der Regel mit Luft oder mit einem Silikonöl als Druckübertragungsmedium gefüllt ist oder für Absolutddrucksensoren evakuiert sein kann. Die Druckkammer muß gas- bzw. flüssigkeitsdicht sein, dies erfordert einen erheblichen Aufwand bei der Herstellung der Verbindung zwischen Membran und Grundkörper.

Am Membranbett und der dem Membranbett zugewandten Unterseite der Membran sind jeweils Elektroden vorgesehen, die beispielsweise in Sputtertechnik, Aufdampfverfahren oder.z.B. im Siebdruckverfahren, wie in der US-A 50 50 035 beschrieben, aufgebracht werden. Diese beiden Elektroden bilden zusammen einen Meßkondensator, dessen Meßsignal ausgewertet wird.

Wirkt auf die Oberseite der Membran das Prozeßmedium mit einem Druck p und ist dieser Druck unterschiedlich zu dem in der Druckkammer herrschenden Referenzdruck p_{R}, so verformt sich die Membran elastisch. Dies führt zur Änderung des Abstandes der beiden Elektroden und damit zu einer Kapazitätsänderung des Meßkondensators. Die Kapazität des Meßkondensators ist ein Maß für die Druckdifferenz. Sie wird als Meßsignal mit Hilfe einer Auswerteelektronik, an die beide Elektroden angeschlossen sind, erfaßt und ausgewertet.

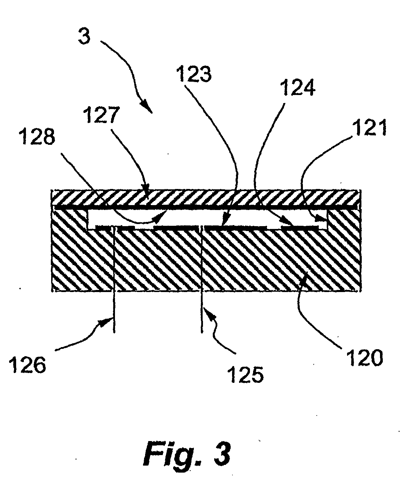

Um u.a. Störeffekte von Temperatur, Feuchte, Gaszusammensetzung und Drift zu minimieren, wird nach dem in Fig. 3 dargestellten Stand der Technik neben dem Meßkondensator ein Referenzkondensator angeordnet. Auf der Stirnfläche des zylindrischen Grundkörpers ist eine zentrale kreisflächenförmige Messelektrode 123 angeordnet, die von einer etwa flächengleichen ringförmigen Referenzelektrode 124 umgeben ist. Über Kontakte 125 und 126 werden die Kapazitäten Cₘ und Cᵣ zwischen der Meßelektrode 123 bzw. der Referenzelektrode 124 und einer Membranelektrode 128 ermittelt. Die Kapazitäten Cₘ und Cᵣ sollten bei planparalleler Anordnung mit der Gegenelektrode d.h. ohne Druckbeaufschlagung der Meßmembran identisch sein. Idealisiert haben die Störgrößen auf beide Kapazitäten Cₚ und Cᵣ in erster Näherung einen vergleichbaren Einfluß, während sich eine Druckbeaufschlagung möglichst wenig auf die Referenzkapazität Cᵣ auswirken sollte. Die Größe der Spanne Cₚ - Cᵣ für eine gegebene Druckbeaufschlagung ist ein Maß für die Empfindlichkeit des Drucksensors.

Für die Konstruktion eines Drucksensors ergeben sich aus der Materialwahl weitere Einschränkungen. Insbesondere keramische Membranen sind relativ empfindlich auf mechanische Zugspannungen. Bei einem zylindrischen Membranbett, wie unter 120 in Fig. 3 gezeigt, treten bei größeren Drücken insbesondere im Bereich der Auflagekante am Grundkörper starke Zugspannungen auf, die unter Umständen zum Bruch der Membran führen können. Hier ist also nur eine eingeschränkte Überlastverträglichkeit gegeben.

Aus der EP-0291393 ist ein Differenzdrucksensor bekannt, bei dem zur Erhöhung der Überlastverträglichkeit das Membranbett eine spezielle Form aufweist. Die Schnittlinie bzw. die Kontur des Membranbetts ist dabei einer Biegelinie der Membran nachgebildet. Im Überlastfall, d.h. einem Differenzdruck weit außerhalb des für den Sensor vorgesehenen Meßbereichs, kommt die Membran desjenigen Drucksensors, an dem der größere Prozeßdruck herrscht, gleichmäßig zur Anlage mit ihrem Membranbett. Dies bewirkt im Überlastfall eine sehr wirksame Abstützung der Membran am Grundkörper. Die europäische Patentanmeldung EP 1 010 973 A1 offenbart einen Drucksensor dessen Membranbett nicht vollständig mit der Biegelinie übereinstimmt aber diese abschnittsweise annähert um einerseits eine hinreichende Abstützung im Überlastfall zu gewährleisten und andererseits das vollflächige Anliegen der Membran am Membranbett zu vermeiden, da dieses mit großen Adhäsionskräften verbunden ist, welche die Membran festhalten oder die Elektroden bei der Ablösung der Membran nach einer Überlast beschädigen können.

Den beschriebenen abstützenden Membranbetten ist gemein, daß sie eine Kontur aufweisen, welche die Membran im Überlastfall zumindest abschnittsweise abstützt, das Ausmaß der Abstützung hängt davon ab, wie weit die Kontur des Membranbetts die Biegelinie der Membran annähert. In den meisten Fällen wird ein abstützendes Membranbett eine Kontur mit einen konkaven Zentralbereich und einen konvexen Randbereich aufweisen, auf Einzelheiten der Form dieser Membranbetten kommt es im gegenwärtigen Zusammenhang nicht an.

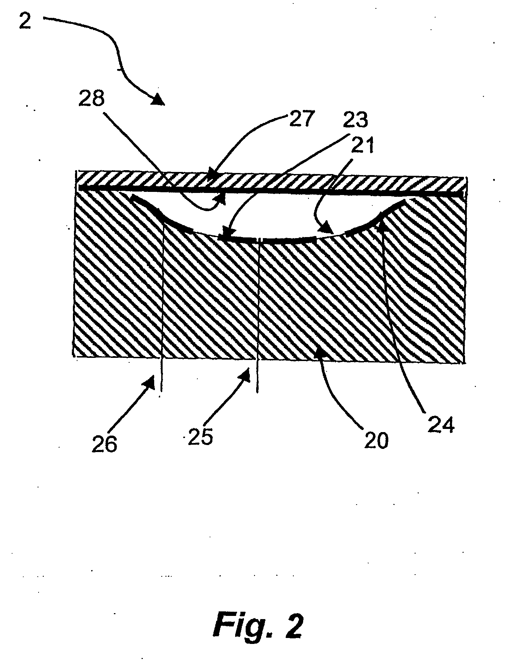

Anhand der in Fig. 2 gezeigten Druckmeßzelle 2 wird ersichtlich, daß bei abstützenden Membranbetten die Referenzelektrode 24 nicht mehr koplanar mit der Meßelektrode 23 angeordnet ist. Daraus ergeben sich mehrere Nachteile für den Drucksensor.

Erstens geht die Durchbiegung der Membran im Randbereich gegenüber der Referenzelektrode mit kleinen Auslenkungen einher. Da jedoch der Abstand zwischen der Referenzelektrode und der Gegenelektrode vergleichweise gering ist, bewirkt bereits die kleine Auslenkung eine große Kapazitätsänderung der Referenzkapazität Cᵣ. Somit verringert sich die Spanne Cₚ - Cᵣ und damit die Empfindlichkeit des Drucksensors.

Zweitens muß die Referenzelektrode aufgrund des verringerten Abstands eine kleinere Fläche aufweisen als die Meßelektrode, wenn sie in der Ruhelage der Meßmembran noch die gleiche Kapazität wie die Meßelektrode haben soll. Dies geht mit erhöhten Anforderungen an die Fertigungsgenauigkeit einher.

Der vorliegenden Erfindung liegt daher die Aufgabe zugrunde, einen kapazitiven Drucksensor mit einem abstützenden Membranbett sowie einer Meßelektrode und einer Referenzelektrode bereitzustellen, wobei der kapazitive Drucksensor die zuvor beschriebenen Nachteile überwindet.

Die Aufgabe wird erfindungsgemäß gelöst durch den Drucksensor gemäß des unabhängigen Anspruchs 1.

Der erfindungsgemäße kapazitive Drucksensor, umfaßt einen Grundkörper, der an einer Stirnseite ein abstützendes Membranbett mit einem konkaven zentralen Bereich aufweist; eine mit dem Grundkörper entlang einer Fügestelle druckdicht verbundene Membran, wobei die Membran das Membranbett überdeckt; eine erste Elektrode die in einem zentralen Abschnitt des Membranbetts angeordnet ist; eine zweite Elektrode, die in einem Bereich zwischen der ersten Elektrode und der Fügestelle an der Stirnseite des Grundkörpers angeordnet ist; eine Gegenelektrode, welche an der dem Grundkörper der zugewandten Fläche der Membran angeordnet ist; wobei das Membranbett in dem Bereich zwischen der ersten Elektrode und der Fügestelle eine Vertiefung aufweist, in welcher die zweite Elektrode angeordnet ist.

Bevorzugt umgibt die zweite Elektrode die erste Elektrode ringförmig. Weiterhin ist es derzeit bevorzugt, daß die erste und die zweite Elektrode etwa die gleiche Kapazität aufweisen, wenn die Membran entspannt ist, d.h. wenn keine Druckbeaufschlagung vorliegt. Konstruktiv ausgedrückt bedeutet dies, daß die erste Elektrode und die zweite Elektrode bei Flächengleichheit bevorzugt etwa den gleichen mittleren Abstand zur Gegenelektrode aufweisen.

Insofern als die erste Elektrode vorzugsweise im konkaven Abschnitt des Membranbetts angeordnet ist, ist der Abstand zur Gegenelektrode für verschiedene Bereiche der ersten Elektrode unterschiedlich. (Für eine axialsymmetrische erste Elektrode ist der Abstand beispielsweise eine Funktion des Radius.) Gleichermaßen kann die zweite Elektrode unterschiedliche Abstände zur Gegenelektrode aufweisen, wenngleich ein konstanter Abstand derzeit bevorzugt ist. Hierbei ist der Abstand der zweiten Elektrode von der Gegenelektrode gleich dem Kehrwert des mittleren Kehrwert des Abstandes der ersten Elektrode von der Gegenelektrode.

Wie eingangs erwähnt sollte die druckabhängige Änderung der Referenzkapazität möglichst gering sein, d.h. die druckabhängige Änderung der Kapazität zwischen der Referenzelektrode und der Gegenelektrode dCᵣ(p) über den Nenndruckbereich des Drucksensors sollte nicht mehr betragen als etwa 20%, vorzugsweise nicht mehr als etwa 10%, weiter bevorzugt nicht mehr als 5% und besonders bevorzugt nicht mehr als 2,5% der entsprechenden druckabhängigen Änderung der Kapazität zwischen der Meßelektrode und der Gegenelektrode dCₘ(p).

Insbesondere zur Erfüllung der strengeren Anforderungen dCᵣ(p) <= 10%(dCₘ(p)), ist es erforderlich, daß der mittlere Abstand der Referenzelektrode von der Gegenelektrode größer ist als der mittlere Abstand der Meßelektrode von der Gegenelektrode. Zur Erzielung von gleichen Kapazitäten in der Gleichgewichtslage bedeutet dies, daß de Fläche der Referenzelektrode entsprechend größer ist als die Fläche der Meßelektrode.

Wie eingangs erörtert wurde, umfassen abstützende Membranbetten einen konkaven zentralen Bereich der bevorzugt von einem konvexen Bereich ringförmig umgeben ist, um die Biegelinie der Membran anzunähern. Die Vertiefung für die Referenzelektrode überlappt bevorzugt mit dem konvexen Bereich des Membranbetts.

In besonderen Ausgestaltungen kann die Vertiefung den gesamten konvexen Bereich überdecken, so daß der konvexe Bereich praktisch nicht mehr vorhanden ist. Wenngleich diese besonderen Fälle nicht zu den derzeit bevorzugten Ausführungsformen der Erfindung gehören, so fallen sie doch unter die allgemeine erfindungsgemäße Lehre, im abstützenden Membranbett eine Vertiefung für die Referenzelektrode vorzusehen.

Die erfindungsgemäße Anordnung bietet abgesehen von der angestrebten verminderten Druckempfindlichkeit der Referenzelektrode noch erhebliche Vorteile für deren Fertigung. Wie eingangs dargelegt, sollte die Referenzkapazität gleich der Meßkapazität sein. Mit zunehmendem Abstand der Referenzelektrode von der Gegenelektrode kann die Referenzelektrode daher eine größere Fläche aufweisen. Dies bedeutet eine Erleichterung für die Herstellung der Referenzelektrode, daß bei einer gegebenen Obergrenze für die relative Fertigungstoleranz der Fläche der Referenzelektrode die absoluten Fertigungstoleranzen mit zunehmender Fläche zunehmen.

Vorzugsweise wird das stützende Membranbett bei keramischen kapazitiven Drucksensoren durch Schleifen in einer Stirnfläche des Grundkörpers ausgebildet. Hierbei kann die Vertiefung für die Referenzelektrode im gleichen Arbeitsgang ausgebildet werden.

Zur Kontrolle des Abstands zwischen der Membran und dem Membranbett bzw. zwischen der Gegenelektrode einerseits sowie der Meßelektrode und der Referenzelektrode andererseits kann an der Stirnfläche des Grundkörpers mindestens eine axiale Anschlagfläche ausgebildet sein, welche das Membranbett um den erforderlichen Abstand überragt. Diese axiale Anschlagfläche kann beispielsweise als ein umlaufender ringförmiger Vorsprung in axialer Richtung ausgebildet sein.

Anstelle der axialen Anschlagfläche kann der Abstand über die Materialstärke des Fügematerials eingestellt werden, mit dem die Membran und der Grundkörper verbunden werden. Hierzu sind insbesondere Aktivhartlote oder Gläser als Fügematerialien geeignet.

Im Ergebnis ermöglicht der erfindungsgemäße Drucksensor die Membran im Überlastfall abzustützen, und dabei weiterhin eine große Spanne Cₚ - Cᵣ zu ermöglichen.

Unter dem Begriff Drucksensor sind im Zusammenhang mit der vorliegenden Erfindung Absolutdrucksensoren, Relativdrucksensoren und Differenzdrucksensoren zu verstehen. Die Erfindung wird nun anhand eines Ausführungsbeispiels eines Absolutdrucksensors erläutert.

Es zeigt:
- Fig. 1: einen Schnitt durch einen erfindungsgemäßen Drucksensor;
- Fig. 2: einen Schnitt durch einen Drucksensor nach dem Stand der Technik mit einem abstützenden Membranbett; und
- Fig. 3: einen Schnitt durch einen Drucksensor nach dem Stand der Technik mit einem Membranbett mit rechteckigem Querschnitt.

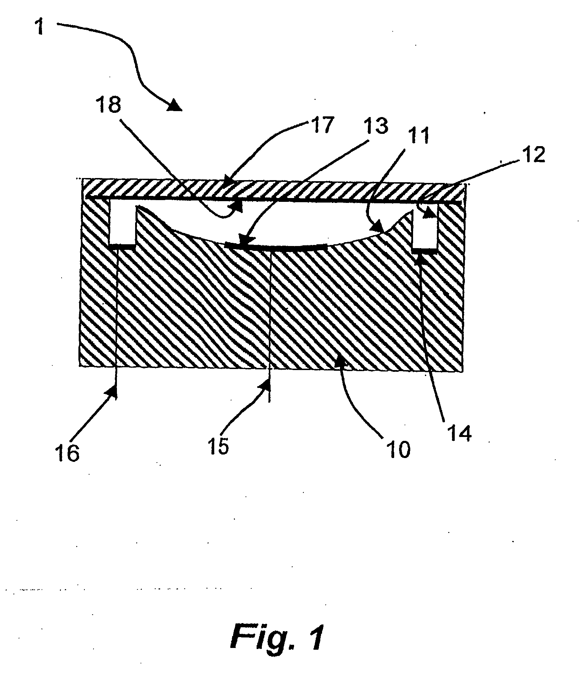

Der in Fig. 1 gezeigte. Drucksensor 1 umfaßt einen zylindrischen Grundkörper 10 und eine Membran 17 aus Al₂O₃, wobei die Membran 17 mit ihrem Randbereich an einer Stirnfläche des Grundkörpers 10 befestigt ist. An der Stirnfläche ist ein Membranbett 11 ausgeprägt, welches die Biegelinie der Membran 17 für den Überlastfall annähert. D.h., die Membran 17 liegt im Überlastfall abschnittsweise am Membranbett an und wird auf diese Weise abgestützt.

Die Größenverhältnisse sind in der Fig. 1 nicht wirklichkeitsgetreu dargestellt, insbesondere ist Tiefe des Membranbetts im Verhältnis zu den anderen Abmessungen zum Zwecke der Verdeutlichung um Größenordnungen übertrieben. Ein Grundkörper hat gewöhnlich einen Durchmesser und eine Stärke in der Größenordnung von einigen cm, während die Tiefe des Membranbetts beispielsweise nur etwa 50 µm beträgt.

Der zentrale konkave Bereich des Membranbetts 11 weist eine Meßelektrode 13 auf, die über eine erste elektrische Durchführung 15 kontaktiert ist. Die Meßelektrode 13 ist von einer ringförmigen Referenzelektrode 14 umgeben, welche auf der im wesentlichen ebenen Basisfläche eines ringförmigen Grabens bzw. einer Aussparung 12 angeordnet ist. Die Referenzelektrode ist über eine zweite elektrische Durchführung 16 kontaktiert.

Die Referenzelektrode 14 ist bei der derzeit bevorzugten Ausführungsform flächengleich mit der Meßelektrode 13.

Die dem Grundkörper 10 zugewandte Seite der Membran 17 weist eine Gegenelektrode 18 auf, die parallel zur Ebene der Referenzelektrode 14 verläuft. Die Gegenelektrode 18 überdeckt die gesamte Membranfläche und ist von der Mantelfläche des Drucksensors her kontaktierbar.

Die Geometrie des Grabens 12 ist so gewählt, daß die Kapazität-zwischen der Referenzelektrode 14 und der Gegenelektrode 18 gleich der Kapazität zwischen der Meßelektrode 13 und der Gegenelektrode 18 ist. D.h. der mittlere Abstand der Referenzelektrode 14 von der Gegenelektrode 18 ist gleich dem Kehrwert des mittleren Kehrwerts des Abstands der Meßelektrode 13 von der Gegenelektrode 18. Der Querschnitt des Grabens 12 ist bei dem dargestellten Ausführungsbeispiel rechteckig, es kann aber auch ein trapezförmiger Querschnitt, ein anderes Polygon oder ein beliebiger unregelmäßiger Querschnitt gewählt werden.

Der Abschnitt des Membranbetts 11, der radial einwärts an den Graben 12 anschließt, ist bei der vorliegenden Ausführungsform so gestaltet, daß die Biegelinie der Membran 17 im Überlastfall von unten asymptotisch angenähert wird. Somit ist gewährleistet, daß es hier im Überlastfall nicht zu isolierten Punktbeiastungen kommt.

Es ist derzeit bevorzugt, den Übergang zwischen dem Membranbett 11 und dem Graben 12 so zu gestalten, daß Ober den gesamten Druckmeßbereich die Membran 17 nicht im Bereich des Übergangs aufliegt. Hierdurch werden Hystereseeffekte aufgrund der Reibung zwischen Membran und Grundkörper vermindert. Andererseits muß der Abstand zwischen der Membran und dem Membranbett hinreichend gering sein, daß die gewünschte Überlastfestigkeit gewährleistet ist.

Weitere Ausgestaltungen und Modifikationen der vorliegenden Erfindung, insbesondere die Realisierung der erfindungsgemäßen Lehre in einem Relativdrucksensor oder einem Differenzdrucksensor, ergeben sich für den Fachmann, ohne vom Grundgedanken der Erfindung abzuweichen.

## Patentansprüche

1. Kapazitiver Drucksensor (1), umfassend:
einen Grundkörper (10), der an einer Stirnseite ein abstützendes Membranbett (11), mit einem konkaven zentralen Bereich aufweist;
eine mit dem Grundkörper (10) entlang einer Fügestelle druckdicht verbundene Membran (17), wobei die Membran (17) das Membranbett (11) überdeckt;
eine erste Elektrode (13) die in einem zentralen Abschnitt des Membranbetts (11) angeordnet ist;
eine zweite Elektrode (14), die in einem Bereich zwischen der ersten Elektrode (13) und der Fügestelle an der Stirnseite des Grundkörpers (10) angeordnet ist;
eine Gegenelektrode (18), welche an der dem Grundkörper (10) der zugewandten Fläche der Membran angeordnet ist; **dadurch gekennzeichnet, daß**
das Membranbett (11) in dem Bereich zwischen der ersten Elektrode (13) und der Fügestelle eine Vertiefung (12) aufweist in welcher die zweite Elektrode (14) angeordnet ist.

2. Drucksensor nach Anspruch 1, wobei die zweite Elektrode (14) die erste Elektrode (13) ringförmig umgibt.

3. Drucksensor nach Anspruch 1 oder 2, wobei die Kapazität zwischen der ersten Elektrode und der Gegenelektrode etwa gleich der Kapazität zwischen der zweiten Elektrode und der Gegenelektrode ist, wenn die Membran entspannt ist.

4. Drucksensor nach einem der vorhergehenden Ansprüche, wobei die druckabhängige Änderung der Kapazität zwischen der zweiten Elektrode und der Gegenelektrode über den Nenndruckbereich des Drucksensors nicht mehr als etwa 20% vorzugsweise nicht mehr als etwa 10%, weiter bevorzugt nicht mehr als 5% und besonders bevorzugt nicht mehr als 2,5% der entsprechenden druckabhängige Änderung der Kapazität zwischen der ersten Elektrode und der Gegenelektrode ist.

5. Drucksensor nach einem der vorhergehenden Ansprüche, wobei ohne Druckbeaufschlagung der Membran der mittlere, Abstand der ersten Elektrode (13) von der Gegenelektrode (18) kleiner ist als der mittlere Abstand der zweiten Elektrode (14) von der Gegenelektrode (18).

6. Drucksensor (1) nach einem der vorhergehenden Ansprüche, wobei der Drucksensor einen keramischen Grundkörper (10) und eine keramische Membran (17) aufweist.

7. Drucksensor nach einem der vorherigen Ansprüche, wobei der Grundkörper an seiner Stirnfläche im Randbereich einen Anschlag aufweist, durch welchen der Abstand der Gegenelektrode von der ersten bzw. zweiten Elektrode festgelegt wird.

## Claims

1. Capacitive pressure sensor (1), comprising:
a base body (10) which at an end side has a supporting diaphragm bed (11) with a concave central region;
a diaphragm (17) which is connected pressure-tightly to the base body (10) along a joint, the diaphragm (17) covering the diaphragm bed (11);
a first electrode (13) which is arranged in a central section of the diaphragm bed (11);
a second electrode (14) which is arranged, in a region between the first electrode (13) and the joint, on the end side of the base body (10);
a counter-electrode (18) which is arranged on the diaphragm surface facing the base body (10);
**characterised in that**
the diaphragm bed (11) has, in the region between the first electrode (13) and the joint, an indentation (12) in which the second electrode (14) is arranged.

2. Pressure sensor according to Claim 1, in which the second electrode (14) surrounds the first electrode (13) in annular fashion.

3. Pressure sensor according to Claim 1 or 2, in which the capacitance between the first electrode and the counter-electrode is approximately equal to the capacitance between the second electrode and the counter-electrode when the diaphragm is relaxed.

4. Pressure sensor according to one of the preceding claims, in which the pressure-dependent change of the capacitance between the second electrode and the counter-electrode over the nominal pressure range of the pressure sensor is no more than approximately 20%, preferably no more than approximately 10%, with further preference no more than 5%, and with particular preference no more than 2.5% of the corresponding pressure-dependent change of the capacitance between the first electrode and the counter-electrode.

5. Pressure sensor according to one of the preceding claims, in which, without pressurisation of the diaphragm, the average distance between the first electrode (13) and the counter-electrode (18) is less than the average distance between the second electrode (14) and the counter-electrode (18).

6. Pressure sensor (1) according to one of the preceding claims, the pressure sensor having a ceramic base body (10) and a ceramic diaphragm (17).

7. Pressure sensor according to one of the preceding claims, in which the base body has, at its end face in the border region, a stop by means of which the distance between the counter-electrode and the first and second electrode is defined.

## Revendications

1. Capteur de pression (1) capacitif, comprenant :
un corps de base (10) qui présente sur un côté frontal, un lit de membrane (11) à support avec une zone centrale concave ;
une membrane (17) reliée de façon étanche au corps de base (10) le long d'un endroit de jointure, la membrane (17) recouvrant le lit de membrane (11) ;
une première électrode (13) qui est disposée dans une section centrale du lit de membrane (11) ;
une deuxième électrode (14) qui est disposée dans une zone située entre la première électrode (13) et l'endroit de jointure sur le côté avant du corps de base (10) ;
une contre-électrode (18) qui est disposée sur la surface, orientée vers le corps de base, de la membrane ; **caractérisé en ce que**,
le lit de membrane (11) présente dans la zone entre la première électrode (13) et l'endroit de jointure , un renfoncement (12) dans lequel est disposée la deuxième électrode (14).

2. Un capteur de pression selon la revendication 1, où la deuxième électrode (14) entoure sous forme d'anneau la première électrode (13).

3. Un capteur de pression selon la revendication 1 ou 2, où la capacité entre la première électrode et la contre-électrode est à peu près identique à la capacité entre la deuxième électrode et la contre-électrode, lorsque la membrane est détendue.

4. Un capteur de pression selon une des revendications précédentes, où la modification selon la pression, de la capacité entre la deuxième électrode et la contre-électrode par l'intermédiaire de la zone de la pression nominale du capteur de pression n'est pas supérieure à environ 20%, de préférence, inférieure à environ 10%, de manière encore préférée, inférieure à 5% et tout particulièrement préféré, inférieure à 2,5% de la modification correspondante selon la pression de la capacité entre la première électrode et la contre-électrode.

5. Un capteur de pression selon une des revendications précédentes, où la distance moyenne de la première électrode (13) par rapport à la contre-électrode (18) est plus petite que la distance moyenne de la deuxième électrode (14) par rapport à la contre-électrode (18) sans application de pression.

6. Un capteur de pression selon une des revendications précédentes, où le capteur de pression présente un corps de base (10) en céramique et une membrane (17) en céramique.

7. Un capteur de pression selon une des revendications précédentes, où le corps de base présente une butée sur sa surface frontale dans la zone de bord, grâce à laquelle butée on fixe la distance de la contre-électrode de la première, respectivement, deuxième électrode.
